# FASCICULE DE BREVET EUROPEEN

(11) **EP 3 397 484 B1**
(45) Date de publication et mention de la délivrance du brevet: **29.09.2021**
(21) Numéro de dépôt: 16829275.3
(22) Date de dépôt: 22.12.2016
(51) Int. Cl.: B32B 17/10

(54) **PROCÉDÉ DE FABRICATION D'UN VITRAGE FEUILLETÉ DE VÉHICULE DANS LEQUEL EST INCORPORÉ UN ÉCRAN OLED**
VERFAHREN ZUR HERSTELLUNG EINER FAHRZEUGVERGLASUNG, IN DIE EIN OLED-SCHIRM EINGEBAUT IST
PROCESS FOR MANUFACTURING AN AUTOMOTIVE GLAZING PANEL INTO WHICH AN OLED SCREEN IS INCORPORATED

(30) Priorité: 30.12.2015 FR 1563453
(43) Date de publication de la demande: 07.11.2018
(73) Titulaire: SAINT-GOBAIN GLASS FRANCE, 92400 Courbevoie (FR)
(72) Inventeur: LABROT, Michael, 52072 Aachen (DE)
(74) Mandataire: Saint-Gobain Recherche
(86) Numéro de dépôt international: PCT/FR2016/053631
(87) Numéro de publication internationale: WO 2017/115036

(56) Documents cités:
- EP-A1- 2 955 164
- WO-A1-2014/083110
- DE-A1-102007 012 571
- DE-A1-102013 003 686
- FR-A1- 2 578 485
- US-A1- 2009 219 468

## Description

La présente invention a trait à l'intégration d'un écran ou élément OLED ou AMOLED dans un vitrage feuilleté de véhicule de transport.

L'intégration d'un écran OLED dans un vitrage feuilleté peut être réalisée dans toute partie de sa surface, périphérique à centrale, pourvu que l'écran OLED soit visible par l'utilisateur. L'écran OLED est flexible, relativement fin et fragile, à l'instar des éléments de connectique auxquels il est relié.

WO2014/083110A1 concerne des dispositifs organiques électroniques ou optoélectroniques intégrés par assemblage dans des structures verrières et divulgue un procédé de fabrication de verre feuilleté comprenant au moins un dispositif organique électronique ou optoélectronique, préférentiellement au moins un dispositif organique électroluminescent, dans lequel ledit dispositif est disposé dans une réserve pratiquée dans un intercalaire de feuilletage en matière polymérique, ledit intercalaire de feuilletage étant disposé entre deux intercalaires de feuilletage en matière polymérique.

Dans les conditions usuelles d'assemblage d'un vitrage feuilleté, combinant un chauffage de jamais moins de 90 °C jusqu'à 140 °C, une mise sous dépression (vide) de l'intérieur de la structure feuilletée visant à évacuer l'air présent entre les différents constituants (surface de l'intercalaire de feuilletage rugueuse et irrégulière avant chauffage), et l'application d'une pression à l'extérieur de la structure feuilletée pour favoriser le collage et la cohésion durable de l'ensemble, un écran OLED ne résisterait pas, mais serait endommagé sinon complètement détruit.

Les inventeurs ont donc eu comme objectif de définir et mettre en œuvre des conditions de feuilletage préservant totalement et durablement l'intégrité et la fonctionnalité d'un écran OLED au sein du vitrage feuilleté de véhicule de transport dans lequel il est intégré. A cet effet, l'invention a pour objet un procédé de fabrication d'un vitrage feuilleté de véhicule de transport comprenant les étapes consistant à :
- disposer successivement sous forme d'un empilement :
   ∘ un premier vitrage, en verre minéral, avec une première face principale dite F1, notamment destinée à être côté extérieur du véhicule, et une deuxième face principale opposée dite F2, de préférence d'épaisseur E1 d'au plus 2,5mm (surtout pour les automobiles),
   ∘ un premier intercalaire de feuilletage en matière polymérique, côté face F2,
   ∘ un second intercalaire de feuilletage en matière polymérique et, dans une réserve pratiquée dans celui-ci, un écran de visualisation à diode électroluminescente organique dit écran ou élément OLED, flexible et directement prolongé vers un bord du vitrage, par un élément de connexion qui lui est relié et se prolonge hors de l'empilement,
   ∘ un troisième intercalaire de feuilletage en matière polymérique, et
   ∘ un deuxième vitrage, en verre minéral, avec une troisième face principale dite F3 côté intercalaire et une quatrième face principale opposée dite F4, notamment destinée à être côté intérieur du véhicule, de préférence d'épaisseur E'1 d'au plus 2,2mm (surtout pour les automobiles), puis à
- soumettre l'ensemble à un vide à température ambiante de manière à évacuer l'air au sein de l'empilement,
- chauffer l'ensemble à une température au plus égale à 85 °C, de préférence au plus égale à 80 °C et de manière particulièrement préférée au plus égale à 75 °C en continuant à le soumettre à un vide.

La durée de la dernière étape comprenant un chauffage peut être par exemple approximativement de 18 h pour obtenir un collage très fort et durable. Cependant, il est possible d' arrêter l'aspiration avant les 18 h à 75 °C, après une certaine durée à déterminer au cas par cas, puis d'enlever le vacuum ring et finaliser l'assemblage dans une simple étuve sans vacuum ring.

L'intégrité de l'écran OLED comme de l'élément de connexion n'est jamais susceptible d'être affectée dans les conditions de ce procédé. L'application d'un vide est effectuée par tout moyen d'aspiration.

L'écran OLED occupe une fraction de la surface du vitrage feuilleté ; ses dimensions sont variables, non limitées. Plusieurs écrans OLED sont susceptibles d'être disposés au sein du vitrage feuilleté, à différents endroits de sa surface, plutôt à proximité de sa périphérie car les éléments de connexion sont opaques et l'on cherche bien entendu à préserver un clair de vue maximal. Plusieurs éléments de connexion peuvent être associés à un seul et même écran ou élément OLED.

Si l'épaisseur de l'écran ou élément OLED est au plus égale à 0,15 mm, il est possible selon l'invention de ne pas employer un second intercalaire de feuilletage, à condition que la géométrie de l'écran ou élément OLED et de son ou ses éléments de connexion le permette : écran ou élément OLED pas trop proche d'un bord du vitrage feuilleté, élément(s) de connexion fin et étroit. On adapte alors l'épaisseur de l'écran ou élément OLED soit compensée de manière invisible par leur fluage.

Le premier et le deuxième vitrages sont constitués de verre silicosodocalcique clair ou éventuellement coloré, et peuvent comprendre des couches fonctionnelles telles que de réflexion du rayonnement solaire, bas-émissive, hydrophobe, auto-nettoyante photocatalytique, anti-condensation / anti-buée...

Toutes informations peuvent être affichées sur l'écran OLED : conditions atmosphériques extérieures et intérieures, vision de l'environnement arrière, vision de l'environnement latéral gauche, droit, informations liées aux conditions de conduite et panneaux de signalisation, informations techniques relatives au véhicule de transport pour un pare-brise par exemple.

Conformément à d'autres caractéristiques préférées du procédé de l'invention :
- pendant l'étape consistant à chauffer l'ensemble en le soumettant à un vide, on ne lui applique pas simultanément une pression extérieure additionnelle comme par exemple dans un autoclave ; cette disposition vise à limiter les forces mécaniques extérieures auxquelles sont soumis l'écran OLED et l'élément de connexion ;
- les étapes dans lesquelles l'ensemble est soumis à un vide sont effectuées par confinement étanche de toute la périphérie de l'empilement, tel qu'au moyen d'une enveloppe périphérique de type élastomère souvent désignée par les termes anglais « vacuum ring » et aspiration dans le volume périphérique confiné par un trou de cette enveloppe ; cette réalisation sera décrite plus en détails ci-dessous ;
- selon une alternative, les étapes dans lesquelles l'ensemble est soumis à un vide sont effectuées au moyen d'une enceinte sous vide ou d'un sac à vide dont une partie au moins des parois est rigide de manière à protéger l'élément de connexion en évitant qu'il soit soumis à un contact physique sous une contrainte mécanique trop forte ;
- le premier vitrage est préalablement muni, sur une bande périphérique de sa face F2, d'une couche d'émail ; celle-ci a généralement pour fonction de cacher le cordon de colle du vitrage sur la baie de carrosserie, vu de l'extérieur ; par ailleurs dans le cadre de l'invention, l'émail peut avantageusement s'étendre de manière à cacher les éléments de connexion (opaques) vus de l'extérieur, et éventuellement d'autres éléments comme il sera vu par la suite ;
- selon une première variante, une étroite frange périphérique de l'écran OLED (appelée bord technique) et de la zone du second intercalaire qui l'entoure et tout l'élément de connexion sont préalablement munis, sur leur face orientée vers la face F3, d'un masquage, ou ce masquage est déposé avant la disposition du troisième intercalaire, ou encore ce masquage, pouvant consister en polytéréphtalate d'éthylène (PET) opaque, a été mis en adhésion avec ou fait partie de l'ensemble de l'écran OLED et de l'élément de connexion dès son prémontage en vue de son stockage ou fait partie d'un film qui a été mis en adhésion avec cet ensemble prémonté ;
- selon une seconde variante, la face F4 est munie, en regard d'une étroite frange périphérique de l'écran OLED et de la zone du second intercalaire qui l'entoure, et en regard de toute la surface de l'élément de connexion, d'un masquage ; ces deux variantes ne s'excluent pas nécessairement mutuellement, et l'on peut imaginer un masquage du bord technique de l'écran OLED selon la première variante et un masquage de l'élément de connexion selon la seconde, ou inversement, ou un double masquage du bord technique de l'écran OLED ou de l'élément de connexion selon les deux variantes à la fois ; le masquage a pour fonction de cacher des parties inutiles et disgracieuses du dispositif pour n'en laisser visible de l'intérieur que la partie utile ; tout procédé adapté à la nature du substrat selon la première ou seconde variante, peut être employé : impression telle que jet d'encre, sérigraphie, émail comme sur la face F2... ; cependant un masquage selon la seconde variante doit être plus large que selon la première, pour masquer lorsque l'on regarde sous un angle à travers l'épaisseur du deuxième vitrage. Il faut aussi prendre en compte les erreurs de positionnement des différents constituants ;
- la face F3 est munie d'une couche électroconductrice et éventuellement d'une amenée de courant pour celle-ci; cette couche peut consister en un empilement réfléchissant le rayonnement solaire, à l'argent ou autre, ou d'un revêtement /empilement chauffant muni à cet effet de son amenée de courant ; quand la couche électroconductrice est un empilement commercialisé par la Société demanderesse sous la marque enregistrée Kappa®, par exemple, elle peut être recouverte directement d'un masquage du bord technique de l'écran ou élément OLED mentionné précédemment ;
- l'épaisseur de l'écran OLED est essentiellement la même que celle du second intercalaire ; seules de très petites différences d'épaisseurs, pratiquement insignifiantes, peuvent être compensées par le fluage des intercalaires de feuilletage en matière polymérique, notamment thermoplastiques ; il n'est pas exclu de recouvrir ou enrober, si nécessaire, l'écran OLED en matière polymérique, transparente, pour en augmenter l'épaisseur à la valeur de celle du second intercalaire ou, si nécessaire, pour isoler de façon étanche l'écran ou élément OLED vis-à-vis de l'oxygène, de l'eau et des plastifiants susceptibles de le dégrader ;
- l'élément de connexion est un circuit imprimé flexible (en anglais : Flexible Printed Circuit -FPC-) partiellement recouvert ou enrobé, le cas échéant, de tout matériau pour en augmenter l'épaisseur à une valeur essentiellement égale à celle du second intercalaire, au moins jusqu'au bord du vitrage feuilleté, pour la même raison qu'évoquée relativement à l'épaisseur de l'écran OLED ;
- la largeur de l'élément de connexion est essentiellement égale à celle de l'écran ou élément OLED jusqu'au bord du vitrage feuilleté, de manière à en faciliter l'insertion dans l'intercalaire de feuilletage ;
- l'élément de connexion est courbé (flexible) et collé à la face F4 au moyen d'un adhésif, notamment du type sensible à la pression;
- les intercalaires de feuilletage en matière polymérique sont choisis parmi les polyvinylbutyral, éthylène - acétate de vinyle, polyuréthane ou résine ionomère, seuls ou en mélanges de plusieurs variétés de l'un d'eux et/ou de plusieurs d'entre eux ; le terme « variétés » fait ici référence à des variations du taux de plastifiant, de ramifications/linéarité, masse moléculaire moyenne des molécules... ;
- au moins l'un des premier et troisième intercalaires de feuilletage en matière polymérique est avantageusement à haut fluage, ce qui facilite la disparition au cours du feuilletage de la structuration de surface présentée par l'intercalaire avant sa mise en œuvre, ou acoustique ; un intercalaire de feuilletage acoustique comporte une couche de cœur plus molle à teneur augmentée en plastifiants, et qui procure la propriété d'isoler du bruit.

D'autres objets de l'invention consistent en :
- un vitrage feuilleté de véhicule de transport notamment fabriqué par un procédé tel que décrit ci-dessus, caractérisé en ce que l'écran OLED (3) est opaque ou transparent et a une épaisseur comprise entre 0,15 et 0,8 mm, de préférence au plus égale à 0,7 mm, et de manière particulièrement préférée au plus égale à 0,6 mm ; un écran ou élément OLED transparent est de préférence défini par une transmission lumineuse (TL) de la zone du vitrage feuilleté le comprenant au moins égale à 70 %, auquel cas cette zone peut être dans la zone A ou B réduite d'un pare-brise selon la norme européenne UN-ECE R43 en particulier pages 138 et 139 ; dans la présente invention, la désignation « opaque ou transparent » est plus large et comprend aussi toutes les situations intermédiaires dans lesquelles la TL de la zone du vitrage feuilleté comprenant l'écran ou élément OLED est inférieure à 70 %, notamment au plus égale à 10 % (colorée...) et même à 5 %, et le cas de l'écran ou élément OLED opaque (TL nulle par exemple par ajout d'une couche ou peinture - métallique...- à l'arrière du substrat plastique du type PET porteur du système OLED), et dans ces cas où la TL est inférieure à 70 %, cette zone est limitée à la périphérie (donc hors zone A et B réduite d'un pare-brise selon la norme précitée; et
- l'application de ce vitrage feuilleté de véhicule de transport comme pare-brise, vitrage latéral, notamment de véhicule aérien, aquatique ou terrestre tel qu'automobile, camion ou train ; ce vitrage feuilleté est bombé ou bien plan.

L'invention sera mieux comprise à la lumière de la description des dessins en annexe dans lesquels :
- les Figures 1a à 1f représentent schématiquement les étapes d'une première variante du procédé de l'invention ;
- les Figures 2a à 2f représentent schématiquement les étapes d'une deuxième variante du procédé de l'invention ;
- la Figure 3 est une représentation schématique partielle vue de l'intérieur d'un véhicule de transport, d'un vitrage selon l'invention ;
- la Figure 4 est une représentation schématique vue de l'intérieur d'un véhicule de transport, d'un vitrage selon l'invention.

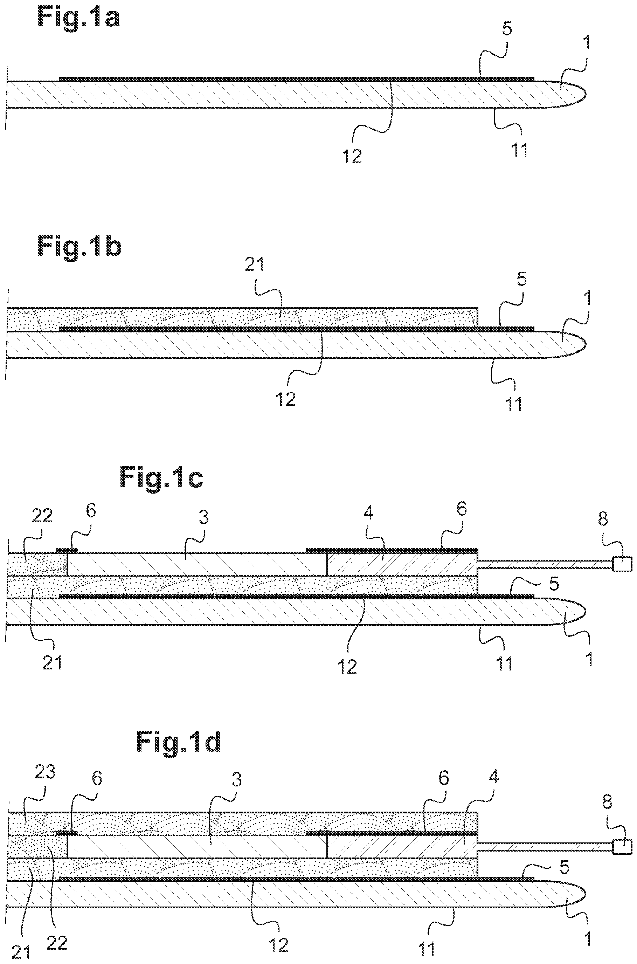

La Figure 1a représente une première feuille 1 de 2,1 mm d'épaisseur de verre flotté silicosodocalcique portant une bande périphérique 5 d'émail sur une face 12, appelée face F2, l'autre face 11 appelée face F1 de la feuille 1 étant destinée à être au contact de l'atmosphère extérieure. L'émail 5 a pour fonction de cacher, vus de la face F1, le cordon de colle solidarisant le vitrage feuilleté final à la baie de carrosserie.

La feuille 1 peut être bombée ainsi bien sûr que les autres constituants du vitrage feuilleté, comme dans le cas d'un pare-brise automobile. Elle peut comporter des couches minces fonctionnelles sur l'une ou l'autre de ses faces F1 et F2 ou bien les deux : on peut citer une couche hydrophobe ou autonettoyante photocatalytique en face F1, une couche ou un empilement de couches minces réfléchissant le rayonnement solaire en face F2.

Sur la Figure 1b, on dispose une première feuille 21 de polyvinylbutyral (PVB) sur la face F2 de la feuille de verre 1, en retrait par rapport aux bords de celle-ci 1. On utilise un PVB de variété à relativement haut fluage, ou un PVB de variété acoustique, notamment de 0,81 mm d'épaisseur commercialisé par la Société Eastman sous la marque enregistrée Saflex®, ou de 0,51 mm d'épaisseur commercialisé par la Société Sekisui sous la marque enregistrée S-LEC®.

Sur la Figure 1c, on dispose sur la première feuille 21 de PVB, et conformément à la surface de celle-ci 21, une seconde feuille 22 de PVB et, dans une réserve pratiquée dans celle-ci 22, un écran de visualisation à diode électroluminescente organique dit écran OLED 3, flexible et directement prolongé vers un bord du vitrage, par un élément de connexion 4 qui lui est relié et se prolonge hors de l'empilement.

Le PVB 22 peut être un PVB standard de 0,38 mm ou un PVB à relativement haut fluage. L'écran OLED 3 a une épaisseur de 0,4 mm. La partie de l'élément de connexion 4 incluse dans l'empilement des constituants du vitrage feuilleté est éventuellement recouverte ou enrobée de tout matériau pour en augmenter (si nécessaire) l'épaisseur à une valeur de 0,38 à 0,40mm. L'élément de connexion 4 est un circuit imprimé flexible (en anglais : « Flexible Printed Circuit » - FPC) apte à la mise en œuvre de 2560 X 1600 pixels (écran OLED). Le FPC 4 se prolonge hors de l'empilement par une partie flexible se terminant par un connecteur 8.

Toute la surface du FPC 4 incluse dans l'empilement ainsi qu'une étroite frange périphérique de l'écran OLED 3 et de la zone du second intercalaire 22 qui l'entoure sont recouvertes, sur leur face opposée à la feuille 21 de PVB, d'une pellicule opaque 6 de polytéréphtalate d'éthylène (PET) pouvant être mise en adhésion avec l'ensemble de l'écran OLED 3 et du FPC 4 dès son prémontage en vue de son stockage, ou bien faire partie d'un film qui a été mis en adhésion avec cet ensemble prémonté, film dont on peut alors éventuellement éliminer une partie non désirée prédécoupée avant l'assemblage du vitrage feuilleté. La pellicule opaque 6 constitue un masquage du FPC 4, opaque, et de la jonction entre le PVB 22 et l'écran OLED 3, qui peut comporter des irrégularités et failles, ainsi que des bords techniques de l'écran OLED 3, vus du côté intérieur du vitrage feuilleté, c'est-à-dire de la face du vitrage feuilleté opposée à la face F1. La pellicule 6 peut aussi être un prolongement du matériau polymère recouvrant l'écran ou élément OLED, c'est-à-dire en être partie intégrante.

Sur la Figure 1d, on dispose une troisième feuille (23) de PVB qui, de préférence, est de même nature que celle de la première feuille (21) de PVB. Une au moins de ces première (21) et troisième (23) feuilles de PVB, doit être à haut fluage tel qu'expliqué précédemment, et de préférence les deux le sont.

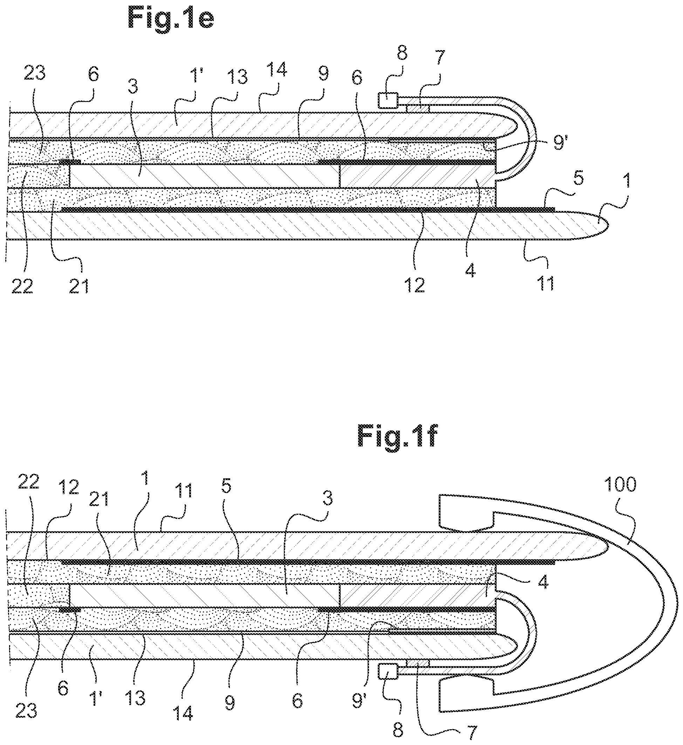

Sur la Figure 1e, on dispose une deuxième feuille 1' de 1,6 mm d'épaisseur de verre flotté silicosodocalcique dont une face 13, dite face F3, est orientée vers les autres constituants du vitrage feuilleté et l'autre face 14, dite face F4, est destinée à être côté habitacle du véhicule de transport. La face F3 est munie d'un empilement électroconducteur 9 commercialisé par la Société demanderesse sous la marque enregistrée Climacoat®. L'empilement 9 est relié à son amenée de courant 9' consistant en un bus bar.

Avant l'assemblage du vitrage feuilleté, la partie du FPC 4 extérieure à l'empilement est repliée et collée définitivement sur la face F4 au moyen d'une colle 7 consistant en un adhésif sensible à la pression.

La Figure 1f représente l'assemblage du vitrage feuilleté dans lequel on adapte sur toute la partie périphérique de l'empilement une enveloppe étanche 100 en élastomère munie d'un orifice non représenté par lequel il sera procédé à une mise sous vide par aspiration. L'enveloppe étanche 100 est souvent désignée par les termes anglais « vacuum ring ». On aspire donc pour évacuer l'air présent au sein de l'empilement à froid pendant au moins 30 min, en l'occurrence 90 min, puis on chauffe à 75 °C pendant 18 h en continuant à aspirer.

Il est précisé que les bords du vacuum ring 100 recouvrent à la fois une partie de la surface du FPC 4, et une partie de la face F4 du deuxième vitrage 1', où le FPC 4 est absent : le FPC 4 est suffisamment fin pour qu'à la limite de présence et d'absence du FPC 4, le green snake 100 assure parfaitement sa fonction d'étanchéité.

Une alternative de cette dernière étape de mise sous vide peut consister à placer l'empilement dans une enceinte sous vide ou un sac à vide dont une partie au moins des parois est rigide de manière à protéger le FPC 4 en évitant qu'il soit soumis à un contact physique sous une contrainte mécanique trop forte. Dans ce cas la partie du FPC 4 extérieure à l'empilement peut n'être repliée et collée sur la face F4 qu'après l'assemblage par les moyens de vide et chauffage.

Les épaisseurs de PVB ne sont pas limitatives : on peut citer un second intercalaire 22 de l'épaisseur essentiellement égale à celle de l'écran ou élément OLED 3, comprise par exemple entre 0,15 et 0,76 mm, et les mêmes valeurs pour les premier et troisième intercalaires 21 et 23. Citons plus précisément comme épaisseurs du second intercalaire 22 un PVB de 0,19 ou 0,38 mm d'épaisseur et pour les premier et troisième un PVB de 0,19, 0,38 ou 0,76 mm ou un PVB à relativement haut fluage ou acoustique d'épaisseur au plus égale à 0,90 mm.

Dans toutes les Figures en annexe, particulièrement en référence à la Figure 1f, l'écran OLED 3 est opaque. L'émail 5 sur la face F2 du vitrage feuilleté cache l'écran OLED vu de l'extérieur, c'est-à-dire de la face F1. Cependant la portée du brevet s'étend également à un écran OLED 3 transparent. Dans ce cas, l'émail 5 sur la face F2 doit être absent en vis-à-vis de la surface de l'écran OLED 3, à l'exclusion d'une étroite frange périphérique de celle-ci, de manière à cacher, vus de l'extérieur (face F1), la zone de jonction entre le PVB 22 et l'écran OLED 3, qui peut comporter des irrégularités et failles, ainsi que des bords techniques de l'écran OLED 3, mais en laissant visible des deux faces du vitrage feuilleté, la partie centrale et quasi-totalité de la surface de l'écran OLED 3 transparent.

L'émail 5 se trouve également en vis-à-vis du FPC 4 opaque de manière à le cacher également vu de l'extérieur (face F1).

En l'absence d'émail 5 sur ces surfaces, on peut prévoir de procurer cette fonction de masquage vu de l'extérieur (face F1) par le fait qu'une étroite frange périphérique de l'écran OLED 3 et de la zone de la seconde feuille 22 de PVB qui l'entoure et tout l'élément de connexion 4 sont préalablement munis, sur leur face orientée vers la face F2, d'un masquage non représenté, à l'instar du masquage 6 sur leur face orientée vers la face F3.

Dans ce cas d'un écran OLED 3 transparent, de surface utile visible des deux côtés du vitrage feuilleté, la première feuille 21 de PVB constitue une bonne protection de cette surface utile de l'écran OLED 3 vis-à-vis du rayonnement ultraviolet. On peut utiliser une première feuille 21 de PVB avec un taux de bloqueurs UV plus important.

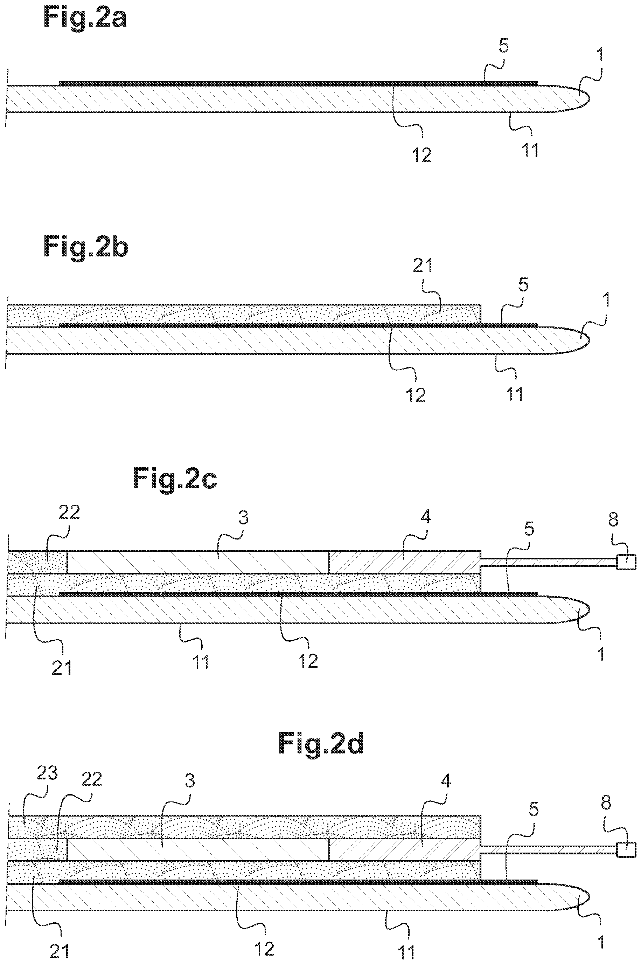

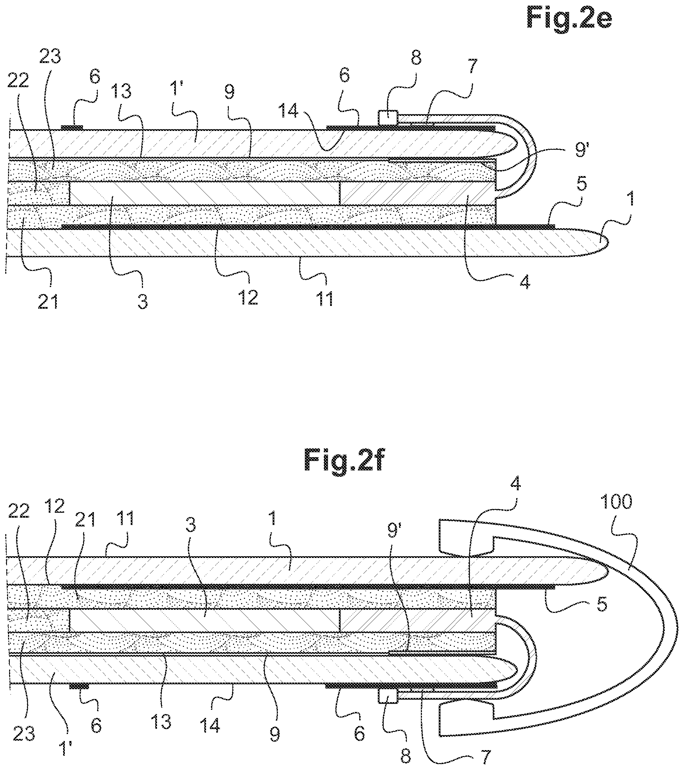

Les Figures 2a à 2f correspondent aux Figures 1a à 1f, dont elles ne diffèrent que par le déplacement du masquage 6, de fonction identique, sur la face F4 (Figures 2e, 2f). Il peut s'agir de toute couche opaque, d'un film de matériau polymère, d'un émail comme l'émail 5 sur la face F2...La face F4 est alors munie, en regard d'une étroite frange périphérique de l'écran OLED 3 et de la zone de la seconde feuille 22 de PVB qui l'entoure, et en regard de toute la surface de l'élément de connexion 4, d'un masquage 6.

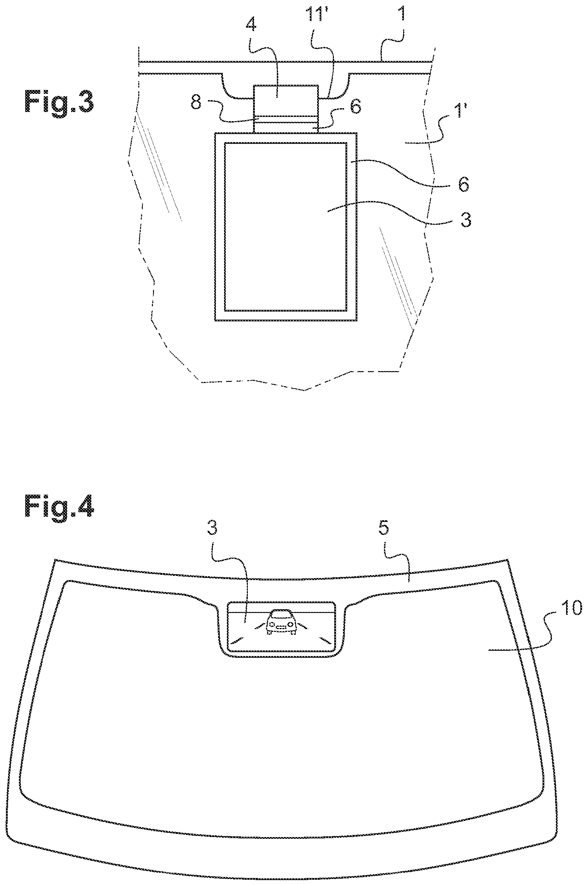

Sur la Figure 3, la partie du vitrage feuilleté selon l'invention vue de l'intérieur d'un véhicule de transport comprend une feuille de verre minéral extérieure 1 et une feuille de verre minéral intérieure 1' dont le bord supérieur présente une encoche 11'.

L'écran OLED 3 est pris en sandwich entre la feuille de verre extérieure 1 et la feuille de verre intérieure 1'. On voit le masquage 6 d'une étroite frange périphérique de l'écran OLED 3 et de la zone de la seconde feuille de PVB qui l'entoure, ainsi qu'une partie proche de l'écran OLED 3 du masquage 6 du FPC 4, la partie plus éloignée de l'écran OLED 3 de ce masquage 6 du FPC 4 étant recouverte par la partie repliée du FPC 4 terminée par son connecteur 8. Le FPC 4 pourrait aussi avantageusement être de même largeur que l'écran ou élément OLED 3, de manière à faciliter l'insertion des deux éléments dans le PVB.

Les dimensions de l'encoche 11' sont adaptées au FPC 4 :
- largeur de l'encoche 11' supérieure ou égale à celle du FPC 4 ;
- profondeur de l'encoche 11' supérieure ou égale à l'épaisseur du FPC 4 car il faut éviter que le FPC 4 soit visible de l'extérieur en cas de bord apparent. En pratique la profondeur de l'encoche 11' est comprise entre 1,5mm - 2mm.
La zone de l'encoche 11' est dépourvue sensiblement d'intercalaire de feuilletage.

Sur la Figure 4, on voit un pare-brise feuilleté vu de l'intérieur du véhicule de transport. Le pare-brise comprend une zone 10 centrale de clair de vue et une zone périphérique d'émail 5 englobant l'écran OLED 3 opaque, que l'émail 5 cache d'une vue de l'extérieur du véhicule. Sur l'écran OLED 3, on voit l'arrière du véhicule de transport.

## Revendications

1. Procédé de fabrication d'un vitrage feuilleté de véhicule de transport comprenant les étapes consistant à :
- disposer successivement sous forme d'un empilement :
- un premier vitrage (1), en verre minéral, avec une première face principale (11) dite F1, notamment destinée à être côté extérieur du véhicule, et une deuxième face principale opposée (12) dite F2, d'épaisseur E1 de préférence d'au plus 2,5mm,
- un premier intercalaire de feuilletage en matière polymérique (21), côté face F2,
- un second intercalaire de feuilletage en matière polymérique (22) et, dans une réserve pratiquée dans celui-ci (22), un écran de visualisation à diode électroluminescente organique dit écran ou élément OLED (3), flexible et directement prolongé vers un bord du vitrage, par un élément de connexion (4) qui lui est relié et se prolonge hors de l'empilement,
- un troisième intercalaire de feuilletage en matière polymérique (23), et
- un deuxième vitrage (1'), en verre minéral, avec une troisième face principale (13) dite F3 côté intercalaire (23) et une quatrième face principale opposée (14) dite F4, notamment destinée à être côté intérieur du véhicule, d'épaisseur E'1 de préférence d'au plus 2,2mm, puis à
- soumettre l'ensemble à un vide à température ambiante de manière à évacuer l'air au sein de l'empilement,
- chauffer l'ensemble à une température au plus égale à 85 °C, de préférence au plus égale à 80 °C et de manière particulièrement préférée au plus égale à 75 °C en continuant à le soumettre à un vide.

2. Procédé selon la revendication 1, **caractérisé en ce que** pendant l'étape consistant à chauffer l'ensemble en le soumettant à un vide, on ne lui applique pas simultanément une pression extérieure additionnelle comme par exemple dans un autoclave.

3. Procédé selon l'une des revendications précédentes, **caractérisé en ce que** les étapes dans lesquelles l'ensemble est soumis à un vide sont effectuées par confinement étanche de toute la périphérie de l'empilement et aspiration dans le volume périphérique confiné.

4. Procédé selon l'une des revendications 1 ou 2, **caractérisé en ce que** les étapes dans lesquelles l'ensemble est soumis à un vide sont effectuées au moyen d'une enceinte sous vide ou d'un sac à vide dont une partie au moins des parois est rigide de manière à protéger l'élément de connexion (4) en évitant qu'il soit soumis à un contact physique sous une contrainte mécanique trop forte.

5. Procédé selon l'une des revendications précédentes, **caractérisé en ce que** le premier vitrage (1) est préalablement muni, sur une bande périphérique de sa face F2, d'une couche d'émail (5).

6. Procédé selon l'une des revendications précédentes, **caractérisé en ce qu'**une étroite frange périphérique de l'écran OLED (3) et de la zone du second intercalaire (22) qui l'entoure et tout l'élément de connexion (4) sont préalablement munis, sur leur face orientée vers la face F3, d'un masquage (6), ou **en ce que** celui-ci (6) est déposé avant la disposition du troisième intercalaire (23) ou encore **en ce que** ce masquage (6) a été mis en adhésion avec ou fait partie de l'ensemble de l'écran OLED (3) et de l'élément de connexion (4) dès son prémontage en vue de son stockage, ou fait partie d'un film qui a été mis en adhésion avec cet ensemble prémonté.

7. Procédé selon l'une des revendications 1 à 5, **caractérisé en ce que** la face F4 est munie, en regard d'une étroite frange périphérique de l'écran OLED (3) et de la zone du second intercalaire (22) qui l'entoure, et en regard de toute la surface de l'élément de connexion (4), d'un masquage (6).

8. Procédé selon l'une des revendications précédentes, **caractérisé en ce que** la face F3 est munie d'une couche électroconductrice (9) et éventuellement d'une amenée de courant (9') pour celle-ci (9).

9. Procédé selon l'une des revendications précédentes, **caractérisé en ce que** l'épaisseur de l'écran OLED (3) est essentiellement la même que celle du second intercalaire (22).

10. Procédé selon l'une des revendications précédentes, **caractérisé en ce que** l'élément de connexion (4) est un circuit imprimé flexible partiellement recouvert ou enrobé, le cas échéant, de tout matériau pour en augmenter l'épaisseur à une valeur essentiellement égale à celle du second intercalaire (22), au moins jusqu'au bord du vitrage feuilleté.

11. Procédé selon l'une des revendications précédentes, **caractérisé en ce que** la largeur de l'élément de connexion (4) est essentiellement égale à celle de l'écran ou élément OLED (3) jusqu'au bord du vitrage feuilleté.

12. Procédé selon la revendication 10, **caractérisé en ce que** l'élément de connexion (4) est courbé (flexible) et collé à la face F4 au moyen d'un adhésif (7).

13. Procédé selon l'une des revendications précédentes, **caractérisé en ce que** les intercalaires de feuilletage en matière polymérique (21), (22) et (23) sont choisis parmi les polyvinylbutyral, éthylène - acétate de vinyle, polyuréthane ou résine ionomère.

14. Procédé selon l'une des revendications précédentes, **caractérisé en ce qu'**au moins l'un des premier (21) et troisième (23) intercalaires de feuilletage en matière polymérique est à haut fluage ou acoustique.

15. Vitrage feuilleté de véhicule de transport fabriqué par un procédé selon l'une des revendications précédentes, **caractérisé en ce que** l'écran OLED (3) est opaque ou transparent et a une épaisseur comprise entre 0,15 et 0,8 mm, de préférence au plus égale à 0,7 mm, et de manière particulièrement préférée au plus égale à 0,6 mm.

16. Application d'un vitrage de véhicule de transport selon la revendication 15 comme pare-brise, vitrage latéral, notamment de véhicule aérien, aquatique ou terrestre tel qu'automobile, camion ou train.

## Patentansprüche

1. Verfahren zur Herstellung einer Fahrzeugverglasung, umfassend die folgenden Schritte, bestehend aus:
- sukzessives Anordnen in Form eines Stapels:
- eine erste Verglasung (1) aus Mineralglas mit einer ersten Hauptfläche (11) mit der Bezeichnung F1, die insbesondere auf der Außenseite des Fahrzeugs vorgesehen ist, und einer zweiten gegenüberliegenden Hauptfläche (12) mit der Bezeichnung F2, vorzugsweise mit einer Dicke E1 von höchstens 2,5 mm,
- eine erste Laminierungszwischenschicht aus Polymermaterial (21), der Fläche F2 zugewandt,
- eine zweite Laminierungszwischenschicht aus Polymermaterial (22) und, in einer darin gebildeten Reserve (22), einen organischen Leuchtdiodenanzeigebildschirm, bezeichnet als OLED-Bildschirm oder OLED-Element (3), der flexibel und direkt in Richtung einer Verglasungskante durch ein Verbindungselement (4), das damit verbunden ist und sich außerhalb des Stapels erstreckt, verlängert ist,
- eine dritte Laminierungszwischenschicht aus Polymermaterial (23), und
- eine zweite Verglasung (1') aus Mineralglas mit einer dritten Hauptfläche (13) mit der Bezeichnung F3 auf der Zwischenschichtseite (23) und einer vierten gegenüberliegenden Hauptfläche (14) mit der Bezeichnung F4, die insbesondere auf der Innenseite des Fahrzeugs vorgesehen ist, vorzugsweise mit einer Dicke E'1 von höchstens 2,2 mm, danach
- Aussetzen der Baugruppe bei Raumtemperatur an ein Vakuum, um die Luft innerhalb des Stapel zu entleeren,
- Erhitzen der Baugruppe auf eine Temperatur von höchstens 85 °C, vorzugsweise höchstens 80 °C und besonders bevorzugt höchstens 75 °C, wobei sie weiterhin einem Vakuum ausgesetzt wird.

2. Verfahren nach Anspruch 1, **dadurch gekennzeichnet, dass** während des Schritts des Erhitzens der Baugruppe durch Aussetzen an ein Vakuum nicht gleichzeitig ein zusätzlicher äußerer Druck auf sie ausgeübt wird, wie beispielsweise in einem Autoklaven.

3. Verfahren nach einem der vorstehenden Ansprüche, **dadurch gekennzeichnet, dass** die Schritte, in denen die Anordnung einem Vakuum ausgesetzt wird, durch versiegelte Begrenzung des gesamten Umfangs des Stapels und Absaugen in dem begrenzten Umfangsvolumen ausgeführt werden.

4. Verfahren nach einem der Ansprüche 1 oder 2, **dadurch gekennzeichnet, dass** die Schritte, in denen die Anordnung einem Vakuum ausgesetzt wird, mittels einer Vakuumkammer oder eines Vakuumbeutels ausgeführt werden, von denen zumindest ein Teil der Wände starr ist, um das Verbindungselement (4) zu schützen, indem verhindert wird, dass es unter übermäßiger mechanischer Beanspruchung einem physischen Kontakt ausgesetzt wird.

5. Verfahren nach einem der vorstehenden Ansprüche, **dadurch gekennzeichnet, dass** die erste Verglasung (1) zuvor auf einem Umfangsstreifen ihrer Fläche F2 mit einer Emailschicht (5) versehen wird.

6. Verfahren nach einem der vorstehenden Ansprüche, **dadurch gekennzeichnet, dass** ein schmaler Umfangsstreifen des OLED-Bildschirms (3) und des Bereichs der zweiten Zwischenschicht (22), der diesen und das gesamte Verbindungselement (4) umgibt, auf ihrer Fläche, die der Fläche F3 zugewandt ist, zuvor mit einer Maskierung (6) versehen wird, oder **dadurch, dass** diese (6) vor der Anordnung der dritten Zwischenschicht (23) abgeschieden wird oder **dadurch, dass** diese Maskierung (6) mit dieser verklebt wurde oder Teil der Baugruppe des OLED-Bildschirms (3) und des Verbindungselements (4) seit ihrer Vormontage in Hinblick auf ihre Lagerung ist, oder Teil einer Folie ist, die an diese vormontierte Baugruppe gehaftet wurde.

7. Verfahren nach einem der Ansprüche 1 bis 5, **dadurch gekennzeichnet, dass** die Fläche F4 in Hinblick auf einen schmalen Umfangsstreifen des OLED-Bildschirms (3) und des Bereichs der zweiten Zwischenschicht (22), der sie umgibt, und in Hinblick auf die gesamte Oberfläche des Verbindungselements (4) mit einer Maskierung (6) versehen ist.

8. Verfahren nach einem der vorstehenden Ansprüche, **dadurch gekennzeichnet, dass** die Fläche F3 mit einer elektrisch leitenden Schicht (9) und gegebenenfalls mit einer Stromleitung (9') dafür (9) versehen ist.

9. Verfahren nach einem der vorstehenden Ansprüche, **dadurch gekennzeichnet, dass** die Dicke des OLED-Bildschirms (3) im wesentlichen der der zweiten Zwischenschicht (22) entspricht.

10. Verfahren nach einem der vorstehenden Ansprüche, **dadurch gekennzeichnet, dass** das Verbindungselement (4) eine flexible gedruckte Schaltung ist, die mit einem beliebigen Material teilweise bedeckt oder beschichtet ist, um dessen Dicke auf einen Wert zu erhöhen, der im wesentlichen dem der zweiten Zwischenschicht entspricht (22), mindestens bis zur Kante der Verbundverglasung.

11. Verfahren nach einem der vorstehenden Ansprüche, **dadurch gekennzeichnet, dass** die Breite des Verbindungselements (4) bis zur Kante der Verbundverglasung im wesentlichen gleich der des OLED-Bildschirms oder -Elements (3) ist.

12. Verfahren nach Anspruch 10, **dadurch gekennzeichnet, dass** das Verbindungselement (4) mittels eines Klebstoffs (7) gebogen (flexibel) ist und auf die Fläche F4 geklebt wird.

13. Verfahren nach einem der vorstehenden Ansprüche, **dadurch gekennzeichnet, dass** die Laminierungsschichten aus Polymermaterial (21), (22) und (23) aus Polyvinylbutyral, Ethylen-Vinylacetat, Polyurethan oder lonomer-Harz ausgewählt sind.

14. Verfahren nach einem der vorstehenden Ansprüche, **dadurch gekennzeichnet, dass** mindestens eine der ersten (21) und dritten (23) Laminierungsschichten aus Polymermaterial ein hohes Kriechen aufweist oder dämpfend ist.

15. Fahrzeugverglasung, die nach einem Verfahren nach einem der vorstehenden Ansprüche hergestellt wird, **dadurch gekennzeichnet, dass** der OLED-Bildschirm (3) undurchsichtig oder transparent ist und eine Dicke zwischen 0,15 und 0,8 mm aufweist, vorzugsweise höchstens 0,7 mm und insbesondere vorzugsweise höchstens 0,6 mm.

16. Anwendung einer Fahrzeugverglasung nach Anspruch 15 als Windschutzscheibe, Seitenverglasung, insbesondere eines Luft-, Wasser- oder Landfahrzeugs wie eines Automobils, Lastwagens oder Zuges.

## Claims

1. A process for manufacturing a transport vehicle laminated glazing comprising the steps consisting in:
- placing in succession to form a stack:
∘ a first glazing (1), made of mineral glass, with a first main face (11) called F1 that is in particular intended to be exterior side of the vehicle, and an opposite second main face (12) called F2, of thickness E1 of preferably at most 2.5 mm;
∘ a first lamination interlayer (21) made of polymeric material, F2 face side;
∘ a second lamination interlayer (22) made of polymeric material and, in a reserve produced in the latter (22), a flexible organic light-emitting diode display screen called the OLED element or screen (3), which is directly extended toward one edge of the glazing by a connection element (4) that is connected thereto and that extends out of the stack;
∘ a third lamination interlayer (23) made of polymeric material; and
∘ a second glazing (1'), made of mineral glass, with a third main face (13) called F3 interlayer (23) side and an opposite fourth main face (14) called F4, in particular intended to be interior side of the vehicle, of thickness E'1 of preferably of at most 2.2 mm; then in
- subjecting the resulting assembly to a vacuum at room temperature so as to remove air from the stack;
- heating the resulting assembly to a temperature of at most equal to 85°C, preferably at most equal to 80°C and particularly preferably at most equal to 75°C while continuing to subject it to a vacuum.

2. The process as claimed in claim 1, **characterized in that** during the step consisting in heating the resulting assembly while subjecting it to a vacuum, an additional exterior pressure is not simultaneously applied thereto as for example in an autoclave.

3. The process as claimed in one of the preceding claims, **characterized in that** the steps in which the resulting assembly is subjected to a vacuum are carried out by seal-tightly confining all of the periphery of the stack and by pumping out the confined peripheral volume.

4. The process as claimed in one of claims 1 and 2, **characterized in that** the steps in which the resulting assembly is subjected to a vacuum are carried out by means of a vacuum chamber or a vacuum bag at least some of the walls of which are rigid so as to protect the connection element (4) by preventing it from being subjected to physical contact under too great a mechanical stress.

5. The process as claimed in one of the preceding claims, **characterized in that** the first glazing (1) is equipped beforehand, on a peripheral strip of its face F2, with an enamel layer (5).

6. The process as claimed in one of the preceding claims, **characterized in that** a narrow peripheral fringe of the OLED screen (3) and of the zone of the second interlayer (22) that surrounds it and any connection element (4) are equipped beforehand, on their face oriented toward the face F3, with a mask (6), or **in that** the latter (6) is deposited before the placement of the third interlayer (23) or even **in that** this mask (6) is adhesively bonded to or forms part of the unit made up of the OLED screen (3) and the connection element (4) from its pre-assembly with a view to its storage, or forms part of a film that is adhesively bonded to this pre-assembled unit.

7. The process as claimed in one of claims 1 to 5, **characterized in that** the face F4 is equipped, facing a narrow peripheral fringe of the OLED screen (3) and of the zone of the second interlayer (22) that surrounds it, and facing all the area of the connection element (4), with a mask (6).

8. The process as claimed in one of the preceding claims, **characterized in that** the face F3 is equipped with an electrically conductive layer (9) and optionally with a current feed (9') for feeding current thereto (9).

9. The process as claimed in one of the preceding claims, **characterized in that** the thickness of the OLED screen (3) is essentially the same as that of the second interlayer (22).

10. The process as claimed in one of the preceding claims, **characterized in that** the connection element (4) is a flexible printed circuit partially covered or coated, where appropriate, with any material in order to increase the thickness thereof to a value essentially equal to that of the second interlayer (22), at least up to the edge of the laminated glazing.

11. The process as claimed in one of the preceding claims, **characterized in that** the width of the connection element (4) is essentially equal to that of the OLED element or screen (3) up to the edge of the laminated glazing.

12. The process as claimed in claim 10, **characterized in that** the connection element (4) is curved (flexible) and adhesively bonded to the face F4 by means of an adhesive (7).

13. The process as claimed in one of the preceding claims, **characterized in that** the lamination interlayers (21), (22) and (23) made of polymeric material are chosen from polyvinyl butyral, ethylene vinyl acetate, polyurethane or ionomer resin.

14. The process as claimed in one of the preceding claims, **characterized in that** at least one of the first and third lamination interlayers (21), (23) made of polymeric material is high-flow or acoustic.

15. A transport vehicle laminated glazing manufactured by a process as claimed in one of the preceding claims, **characterized in that** the OLED screen (3) is opaque or transparent and has a thickness comprised between 0.15 and 0.8 mm, preferably at most equal to 0.7 mm and particularly preferably at most equal to 0.6 mm.

16. The application of a transport vehicle glazing as claimed in claim 15 as a windshield or side window in particular of an air, water or land vehicle such as an automobile, truck or train.
